# FASCICULE DE BREVET EUROPEEN

(11) **EP 2 245 332 B1**
(45) Date de publication et mention de la délivrance du brevet: **27.01.2021**
(21) Numéro de dépôt: 09726146.5
(22) Date de dépôt: 20.02.2009
(51) Int. Cl.: F16F 1/38, B64D 33/00

(54) **DISPOSITIF DE SUPPORT ET DE FIXATION D'UN ÉQUIPEMENT SUR UN CARTER DE NACELLE OU DE MOTEUR D'AVION**
VORRICHTUNG ZUM TRAGEN UND SICHERN EINES BAUTEILS EINES FLUGZEUGTRIEBWERKS ODER EINES GONDELGEHÄUSES
DEVICE FOR SUPPORTING AND SECURING A PIECE OF EQUIPMENT ON AN AIRCRAFT ENGINE OR NACELLE CASE

(30) Priorité: 29.02.2008 FR 0801136
(43) Date de publication de la demande: 03.11.2010
(73) Titulaire: Safran Electrical & Power, 31702 Blagnac Cedex (FR)
(72) Inventeur: BOUCHER, Brice, 77170 Brie-Comte-Robert (FR); COSQUER, Jean-Marc, 77550 Moissy Cramayel (FR); GUERBER, Alain, 77830 Valence en Brie (FR); RUSSMANN, Jacques, 77390 Champdeuil (FR)
(74) Mandataire: Ernest Gutmann - Yves Plasseraud S.A.S.
(86) Numéro de dépôt international: PCT/FR2009/000191
(87) Numéro de publication internationale: WO 2009/118470

(56) Documents cités:
- EP-A- 0 622 560
- EP-A- 1 302 694
- EP-A- 1 703 188
- US-A- 2 367 830
- US-A- 2 751 179
- US-A- 4 151 822

## Description

La présente invention concerne un dispositif de support et de fixation d'un équipement sur un carter de nacelle ou de moteur d'avion, ce type de dispositif permettant de suspendre l'équipement de façon à l'isoler des vibrations et des chocs auxquels il est soumis en fonctionnement.

Un moteur d'avion comprend une turbomachine entourée par une nacelle qui peut porter un ou plusieurs équipements par exemple électriques tels que des unités de calcul, de commande et/ou de puissance, chacun de ces équipements étant fixé sur un carter de la nacelle au moyen d'un dispositif comportant des amortisseurs de vibrations de vibrations. Des équipements peuvent en outre être fixés sur un carter de la turbomachine à l'aide d'amortisseurs de vibrations de vibrations.

De façon connue, chaque amortisseur de vibrations comprend une première partie qui est fixée sur le carter, et une seconde partie qui est montée coaxialement autour de la première partie et qui est reliée par des moyens élastiquement déformables à cette première partie. La seconde partie de l'amortisseur de vibrations est fixée sur l'équipement de façon à suspendre cet équipement au carter de la nacelle ou de la turbomachine.

Cet amortisseur de vibrations absorbe les chocs et les vibrations auxquels le carter est soumis en fonctionnement de façon à limiter les déplacements parasites de l'équipement en fonctionnement.

Dans le cas heureusement peu fréquent de la rupture et de la perte d'une aube de soufflante de la turbomachine, cette aube est projetée vers l'extérieur et vient percuter la nacelle de la turbomachine portant ces équipements. Un choc extrêmement violent se produit qui peut provoquer la détérioration des amortisseurs de vibrations portés par la nacelle.

De plus, après la perte en vol d'une aube de soufflante et l'arrêt volontaire du moteur, la roue de la soufflante est entraînée en rotation par l'air qui s'engouffre dans la nacelle du moteur, par effet de « windmilling ». Ce phénomène se caractérise par des vibrations de basses fréquences (10-15Hz) et de grandes amplitudes (50 à 60mm de déplacement) des éléments portés par la nacelle. Ces vibrations entraînent une détérioration accélérée des amortisseurs de vibrations ainsi qu'une fatigue et un risque de rupture des moyens de fixation des amortisseurs de vibrations au carter de la nacelle. La durée de vie des amortisseurs de vibrations est actuellement de l'ordre d'une dizaine de minutes environ pendant le phénomène de « windmilling », ce qui est très faible et n'est pas suffisant pour permettre au pilote de l'avion d'atterrir en urgence sur le plus proche aéroport.

Il existe donc un risque important de détachement des équipements supportés par ces amortisseurs de vibrations, ces équipements relativement lourds (10 à 15 kilogrammes) pouvant à leur tour venir percuter et détruire la nacelle.

L'invention a notamment pour but d'apporter une solution simple, efficace et économique à ces problèmes de la technique antérieure, qui est notamment lié à la relative fragilité des moyens de fixation des amortisseurs de vibrations utilisés.

La revendication 1 présente cette solution. Son préambule est décrit dans US2751179.

Plus précisément, la solution présentée propose donc un dispositif de support et de fixation d'un équipement sur un carter de nacelle ou de moteur d'avion, ce dispositif comportant au moins un amortisseur de vibrations comprenant une première partie destinée à être fixée sur le carter, et une seconde partie reliée par des moyens élastiquement déformables à la première partie, cette seconde partie étant destinée à être reliée rigidement à l'équipement de façon à suspendre cet équipement au carter, le ou chaque amortisseur de vibrations étant associé à un organe de sécurité :
- destiné à maintenir l'amortisseur de vibrations en place sur le carter en cas de défaillance ou de rupture de cet amortisseur de vibrations ou de moyens de fixation de l'amortisseur de vibrations sur le carter, pour assurer le support et la fixation de l'équipement, et
- monté à cheval sur l'amortisseur de vibrations, cet organe de sécurité comportant une partie médiane qui coiffe ou couvre au moins une partie de l'amortisseur de vibrations, et des extrémités latérales opposées destinées à être fixées sur le carter,
le dispositif comprenant des moyens de fixation de l'organe de sécurité sur le carter qui sont indépendants des moyens de fixation de l'amortisseur de vibrations sur le carter,
le dispositif de support et de fixation étant caractérisé en ce que :
- ledit organe de sécurité est indépendant de l'amortisseur de vibrations,
- la partie médiane de l'organe de sécurité est formée par une plaque plane de forme circulaire ou rectangulaire,
- ladite plaque :
   -- comprend à deux extrémités opposées des pattes latérales de fixation sur le carter, ou
   -- comprend des câbles de fixation sur le carter, à ses deux extrémités opposées, ou
   -- est directement fixée à deux extrémités opposées sur le carter, et
- un joint plat est intercalé entre la partie médiane de l'organe de sécurité et une extrémité supérieure de la première partie de l'amortisseur de vibrations.

En cas de perte d'une aube de soufflante et de projection de cette aube sur la nacelle, l'équipement suspendu sur la nacelle par le dispositif selon l'invention est maintenu en place et ne risque pas de se détacher grâce à l'organe de sécurité. Dans un cas particulier de réalisation de l'invention, l'organe de sécurité permet de maintenir l'équipement en place pendant au moins trois heures pendant le phénomène de « windmilling », ce qui est une durée suffisante pour que le pilote puisse gagner l'aéroport le plus proche et s'y poser (l'avion équipé de ce type de dispositif pourra ainsi obtenir la certification ETOPS 180).

Le montage à cheval de l'organe de sécurité sur l'amortisseur de vibrations permet d'assurer un bon maintien de l'amortisseur de vibrations et de l'empêcher de se déplacer en fonctionnement. Il permet en outre d'avoir accès à l'amortisseur de vibrations et aux moyens de fixation de cet amortisseur de vibrations sur le carter et l'équipement, sans nécessiter le démontage de cet organe de sécurité. Il autorise par exemple le passage d'un outil de serrage/desserrage des vis de fixation de l'amortisseur de vibrations à l'équipement.

L'organe de sécurité est rapporté sur l'amortisseur de vibrations et est fixé directement sur le carter.

En cas de rupture des moyens de fixation de l'amortisseur de vibrations sur le carter, l'organe de sécurité assure la fixation et le maintien de l'amortisseur de vibrations sur le carter.

La partie médiane de l'organe de sécurité coiffe l'amortisseur de vibrations et permet de maintenir cet amortisseur de vibrations en place en l'empêchant de se séparer du carter. Cette partie médiane de l'organe de sécurité est reliée à des moyens de fixation sur le carter.

Concernant la plaque précitée, sa forme est par exemple adaptée à celle d'une extrémité de l'amortisseur de vibrations de façon à bien recouvrir cette extrémité.

Les pattes latérales et la plaque de l'organe de sécurité sont préférentiellement formées d'une seule pièce. Cet organe de sécurité peut être réalisé en métal ou en matériau composite. Il peut être rigide ou déformable élastiquement.

Les pattes latérales de l'organe de sécurité peuvent être conformées de façon à ce que l'organe de sécurité ait une forme en étrier ou en fer à cheval, c'est-à-dire une forme générale en Ω, ou en V ou U renversé.

Les pattes latérales de l'organe de sécurité sont sensiblement parallèles l'une à l'autre ou forment entre elles un angle compris entre 30 et 90° environ. Elles peuvent avoir une forme générale en S, et comprendre en outre une ou plusieurs fentes s'étendant le long de l'axe de l'amortisseur de vibrations, de façon à conférer une certaine souplesse à ces pattes latérales.

En variante, les pattes latérales de l'organe de sécurité peuvent avoir une section en forme de C de façon à augmenter la rigidité des pattes latérales et de l'organe de sécurité et permettre le passage d'un outil de vissage/dévissage.

Dans encore une autre variante, la partie médiane et les pattes latérales de l'organe de sécurité sont formées par des plaques sensiblement planes, ces plaques comportant sur leurs côtés des rebords arrondis orientés vers l'amortisseur de vibrations. Ceci permet de rigidifier l'étrier et de limiter ses déformations en flexion et en torsion.

De façon simple, les pattes latérales peuvent comprendre à leurs extrémités libres des plaquettes ou des rebords d'appui sur le carter, ces plaquettes ou rebords comportant des orifices de passage de vis de fixation de l'organe de sécurité sur le carter.

Le joint est par exemple réalisé dans un matériau élastiquement déformable tel qu'un élastomère. Il permet de rattraper les éventuels jeux de montage du dispositif, d'absorber une partie des chocs et des vibrations auxquels est soumis l'amortisseur de vibrations en fonctionnement, et éventuellement d'améliorer la tenue mécanique de l'amortisseur de vibrations et de l'organe de sécurité avec un coefficient de frottement plus élevé.

Le joint peut être logé dans un renfoncement inférieur de la partie médiane de l'organe de sécurité. L'extrémité supérieure de l'amortisseur de vibrations peut en outre être logée au moins en partie dans ce renfoncement de façon à bien maintenir cet amortisseur de vibrations en position de fonctionnement.

L'invention concerne également un moteur d'avion, comprenant une turbomachine entourée coaxialement par une nacelle, caractérisé en ce qu'il comprend au moins un équipement suspendu à un carter de turbomachine ou de nacelle par un dispositif tel que décrit ci-dessus.

L'invention sera mieux comprise et d'autres détails, caractéristiques et avantages de la présente invention apparaîtront plus clairement à la lecture de la description qui suit faite à titre d'exemple non limitatif et en référence aux dessins annexés, dans lesquels :
- la figure 1 est une vue schématique en perspective d'un équipement monté sur un carter de moteur d'avion par un dispositif selon l'invention,
- la figure 2 est une vue à plus grande échelle du détail I₂ de la figure 1,
- la figure 3 est une vue schématique en perspective d'un amortisseur de vibrations,
- la figure 4 est une vue schématique en coupe axiale de l'amortisseur de vibrations de la figure 3,
- la figure 5 est une vue schématique de dessous de l'amortisseur de vibrations de la figure 3,
- la figure 6 est une vue schématique en perspective d'un organe de sécurité selon l'invention, vu de dessous et de côté,
- la figure 7 est une vue schématique de dessus de l'organe de sécurité de la figure 6,
- la figure 8 est une vue en coupe selon la ligne VIII-VIII de la figure 7,
- la figure 9 est une vue schématique en perspective d'une variante de réalisation du dispositif selon l'invention,
- la figure 10 est une vue schématique en perspective d'une autre variante de réalisation du dispositif selon l'invention.

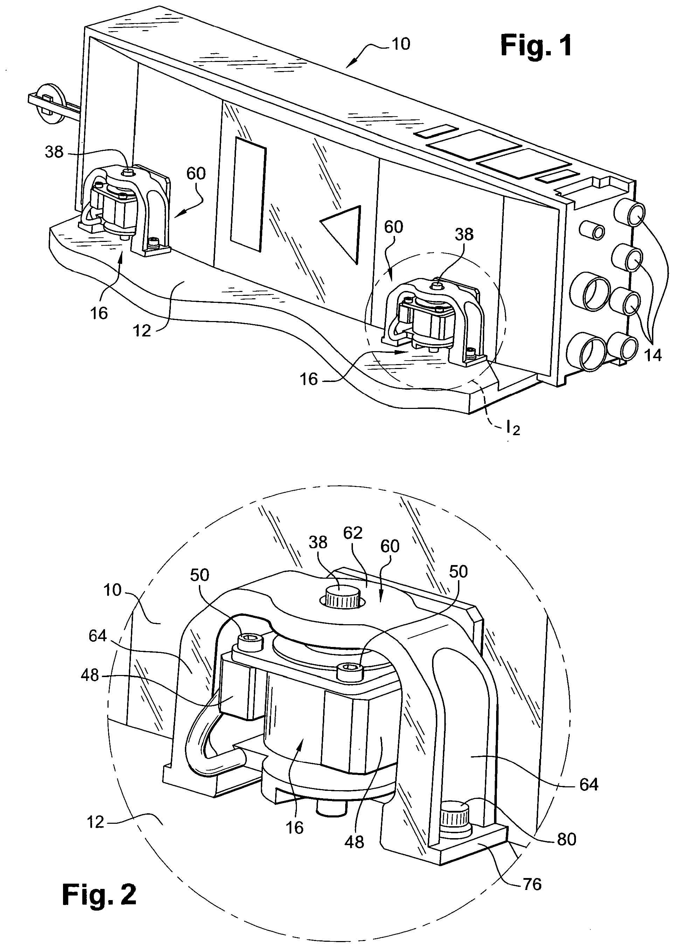

On a représenté en figures 1 et 2 un équipement électrique 10 qui est fixé sur un carter 12 d'un moteur d'avion par un dispositif sécurisé selon l'invention. Ce dispositif peut aussi être utilisé pour fixer un équipement non électrique sur un carter du moteur d'avion.

Le moteur d'avion comprend de façon typique une turbomachine, du type turboréacteur par exemple, qui est montée coaxialement à l'intérieur d'une nacelle sensiblement cylindrique. L'équipement 10 est par exemple monté sur un carter ou une armature de la nacelle de ce moteur. L'équipement 10 peut être une unité de calcul, de commande ou de puissance qui est par exemple utilisée pour activer un inverseur de poussée du moteur.

L'équipement 10 a dans l'exemple représenté une forme générale parallélépipédique et comporte à une extrémité des moyens 14 de connexion à d'autres équipements électriques du moteur. Le carter 12 a une forme annulaire et peut porter un ou plusieurs autres équipements.

Ce type d'équipement est sensible aux vibrations et est en général suspendu sur le carter 12 du moteur par un ou plusieurs amortisseurs de vibrations 16 qui permettent d'isoler cet équipement des vibrations auxquelles le moteur est soumis en fonctionnement.

Un équipement 10 peut être porté par quatre amortisseurs de vibrations 16, comme c'est le cas dans l'exemple représenté (deux amortisseurs de vibrations seulement étant visibles en figure 1).

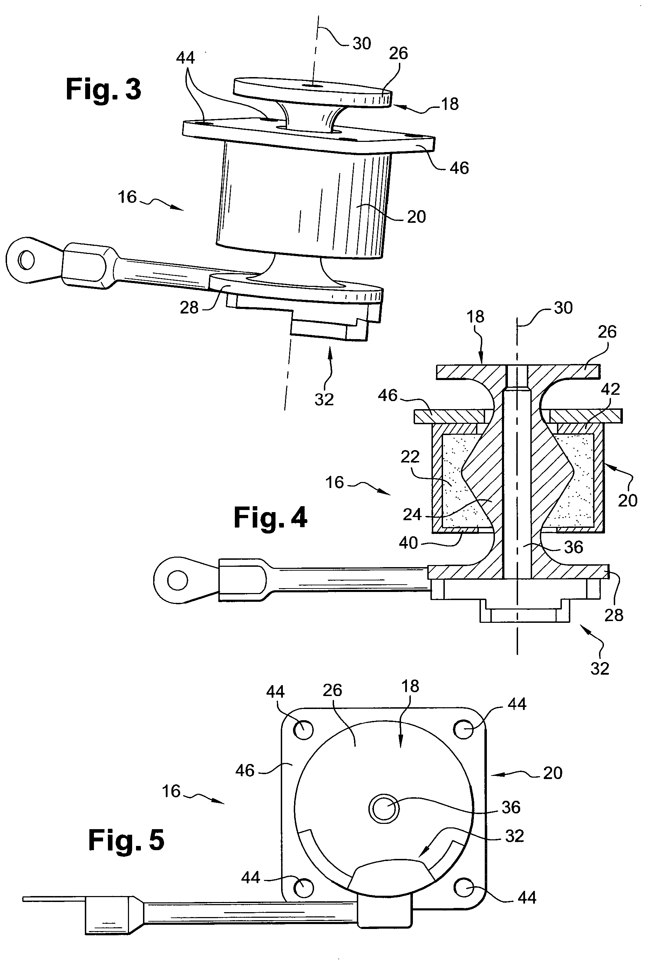

On a représenté aux figures 3 à 5 un amortisseur de vibrations 16. Cet amortisseur de vibrations 16 comporte deux pièces de révolution 18, 20 coaxiales reliées entre elles par des moyens annulaires 22 élastiquement déformables, l'une des pièces de révolution 18 étant fixée sur le carter 12 du moteur et l'autre pièce 20 étant fixée sur l'équipement 10.

La première pièce de révolution 18 qui est fixée sur le carter 12 du moteur comprend une tige longitudinale 24 d'axe 30 portant à ses deux extrémités des disques 26, 28 parallèles entre eux et perpendiculaires à l'axe 30. Dans l'exemple représenté, la tige 24 comprend une partie médiane dont la dimension transversale est plus importante que celle de ses parties d'extrémité.

Le disque inférieur 28 est relié à des moyens 32 d'accrochage (ou de suspension) sur le carter 12 du moteur ou sur un élément de support fixé sur ce carter.

La tige 24 comprend un alésage axial 36 qui est aligné avec des orifices correspondants des disques 26, 28 pour le passage d'une vis 38 de fixation de la première pièce 18 de l'amortisseur de vibrations sur le carter 12 du moteur d'avion (figures 1 et 2).

La partie filetée de la vis 38 est engagée axialement à travers l'orifice du disque supérieur 26, de l'alésage 36 de la tige 24, puis de l'orifice du disque inférieur 28, et est vissée dans un orifice taraudé du carter 12 ou de l'élément de support. En position de serrage, la tête de cette vis 38 prend appui axialement sur la face supérieure du disque supérieur 26.

La seconde pièce de l'amortisseur de vibrations comprend un boîtier cylindrique 20 monté coaxialement autour de la tige 24. Ce boîtier 20 renferme au moins une garniture annulaire élastique 22 montée coaxialement entre la surface extérieure de la tige 24 et la surface cylindrique intérieure du boîtier 20. Le boîtier 20 comprend à son extrémité inférieure et à son extrémité supérieure un rebord annulaire 40, 42 qui s'étend radialement vers l'axe 30 et dont la périphérie interne est à distance de la tige 24.

Une plaque 46 est appliquée et fixée sur la face supérieure du rebord supérieur 42 du boîtier. Cette plaque 46 a un contour externe de forme carrée et comporte un orifice central de passage de la tige 24, le bord de cet orifice central étant situé à distance de la tige 24. La plaque 46 comporte au voisinage de ses angles des orifices 44 de passage de vis 50 de fixation du boîtier 20 sur l'équipement 10 (figures 1 et 2).

L'équipement 10 est relié à ce boîtier 20 par l'intermédiaire de deux doigts supports 48 qui s'étendent parallèlement et à distance l'un de l'autre dans un plan perpendiculaire à l'axe 30 de l'amortisseur de vibrations, ces doigts supports 48 étant reliés à une de leurs extrémités à l'équipement 10 et s'étendant de part et d'autre du boîtier 20 de l'amortisseur de vibrations (figure 2).

Chaque doigt 48 s'étend le long d'un côté de la plaque 46 du boîtier 20, en dessous de cette plaque, et comprend des orifices taraudés, alignés avec les orifices 44 de la plaque 46. Les vis 50 sont engagées dans les orifices 44 de la plaque et vissées dans les orifices des doigts 48 pour assurer la fixation du boîtier 20 sur l'équipement 10.

Le fonctionnement de ce type d'amortisseur de vibrations 16 est bien connu de l'homme du métier.

Dans la technique actuelle, les amortisseurs de vibrations 16 sont maintenus et fixés sur le carter 12 par l'intermédiaire des vis 38 seulement qui traversent coaxialement ces amortisseurs de vibrations et sont vissées dans des orifices taraudés des éléments de support ou du carter. Il existe donc un risque important de détachement de l'équipement 10 en cas de défaillance ou de rupture de ces amortisseurs de vibrations ou de leurs vis de fixation 38.

Par exemple, dans le cas rare de la rupture d'une aube de soufflante, cette aube est projetée sur la nacelle du moteur ce qui produit un choc violent pouvant abîmer, voire détruire les amortisseurs de vibrations 16. Après l'arrêt du moteur, la roue de soufflante est entraînée en rotation par effet de « windmilling », ce qui se traduit par des vibrations importantes du moteur Le choc violent et les vibrations peuvent réduire considérablement la durée de vie des amortisseurs de vibrations 16 et fragiliser les vis 38 de fixation des amortisseurs de vibrations sur le carter 12. En cas de rupture de ces vis 38, l'équipement 10 n'est plus maintenu sur le carter et peut être projeté et détruire des éléments de la nacelle.

L'invention permet de remédier à ce problème grâce à un organe de sécurité supplémentaire de sécurité associé à chacun des amortisseurs de vibrations 16 de support et de fixation de l'équipement 10. Selon l'invention, cet organe de sécurité est monté à cheval sur l'amortisseur de vibrations de façon à maintenir en place l'amortisseur de vibrations et l'équipement 10, même en cas de rupture des vis 38 de fixation des amortisseurs de vibrations sur le carter.

Dans l'exemple de réalisation représenté aux figures 1, 2 et 6 à 8, l'organe de sécurité est un étrier 60 ayant une forme générale en U renversé. Cet étrier 60 comporte une partie médiane formée par une plaque 62 de forme circulaire, et deux pattes latérales 64 diamétralement opposées par rapport à l'axe de révolution de la plaque 62.

La plaque circulaire 62 forme un chapeau destiné à coiffer ou couvrir l'extrémité supérieure de l'amortisseur de vibrations, qui est dans l'exemple représenté le disque supérieur 26 de la première pièce 18 de l'amortisseur de vibrations. Cette plaque 62 s'étend perpendiculairement à l'axe longitudinal 30 de l'amortisseur de vibrations et donc parallèlement au disque supérieur 26 de cet amortisseur de vibrations.

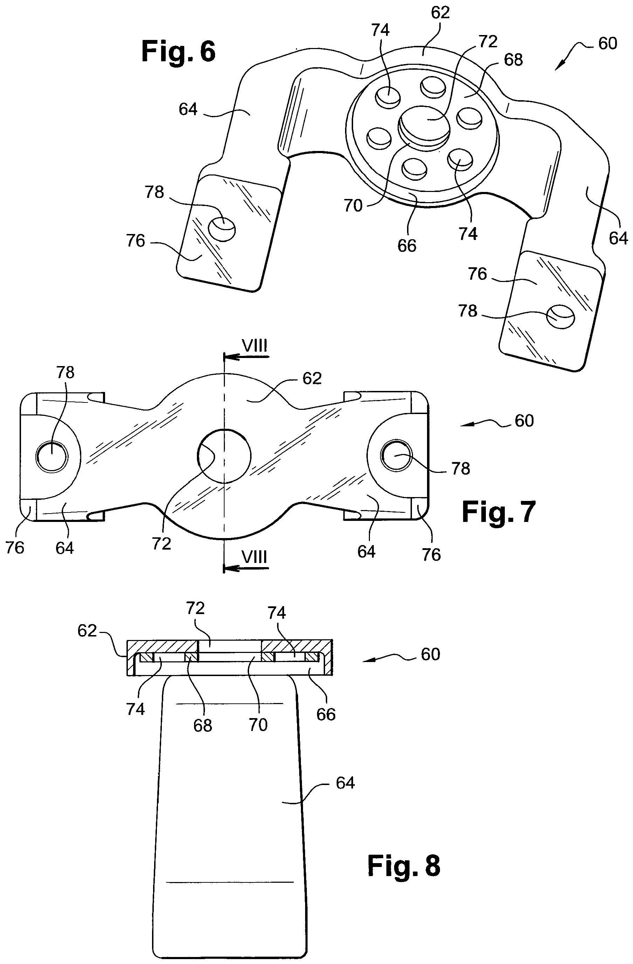

Cette plaque 62 comporte un renfoncement inférieur 66 de forme annulaire complémentaire de celle du disque supérieur 26 de façon à ce qu'au moins la partie supérieure de ce disque soit logée à l'intérieur de ce renfoncement 66 (figures 6 et 8). Ceci permet de définir une position correcte de fonctionnement de l'amortisseur de vibrations et d'empêcher cet amortisseur de vibrations de se séparer du carter.

Un joint annulaire 68 est en outre logé dans le renfoncement 66 de la plaque 62 et intercalé entre la face inférieure de ce renfoncement et la face supérieure du disque 26 de l'amortisseur de vibrations. Ce joint 68 peut être réalisé en matériau élastiquement déformable. Il permet notamment de rattraper des éventuels jeux axiaux de montage entre l'amortisseur de vibrations 16 et l'étrier 60.

Le joint 68 définit un orifice central 70 qui est aligné avec un orifice central 72 correspondant de la plaque 62 de l'étrier pour le passage de la vis de fixation 38. Cette vis est engagée axialement dans les orifices de l'étrier 60, du joint 68 et de l'amortisseur de vibrations 16 et vissée dans un orifice taraudé de l'élément de support ou du carter. La tête de cette vis 38 est logée au moins partiellement à l'intérieur des orifices 70, 72 du joint 68 et de la plaque 62 et prend appui sur la face supérieure du disque supérieur 26 de l'amortisseur de vibrations.

Le joint 68 comporte également des orifices traversants 74 (au nombre de six dans l'exemple représenté), régulièrement répartis autour d'une circonférence centrée sur l'axe de révolution du joint. La taille et la forme de ces orifices 74 sont déterminées de façon à adapter la raideur du joint 68 aux spécificités requises, à limiter les efforts transmis au disque supérieur 26 de l'amortisseur de vibrations, à autoriser des déformations élastiques du joint par serrage entre l'organe de sécurité et l'amortisseur de vibrations, et à absorber les jeux et les dilatations différentielles.

Les pattes latérales 64 de l'étrier sont sensiblement parallèles l'une à l'autre et sont chacune reliée à leurs extrémités libres à une plaquette 76 d'appui sur l'élément de support ou le carter 12. Ces plaquettes 76 s'étendent parallèlement à la plaque circulaire 62 de l'étrier et comprennent chacune un orifice 78 de passage d'une vis 80 de fixation de l'étrier sur l'élément de support ou le carter.

Les pattes latérales 64 sont rigides et ont en section une forme sensiblement en C dont les ouvertures sont orientées radialement vers l'extérieur par rapport à l'axe 30, dans des directions diamétralement opposées, et permettent de recevoir un outil de vissage - dévissage des vis 80.

L'étrier 60 est suffisamment rigide pour retenir l'amortisseur de vibrations en place même en cas de rupture de la vis centrale 38. L'amortisseur de vibrations est alors maintenu en place par l'étrier qui est fixé sur le carter 12 par l'intermédiaire des vis 80. Les pattes latérales 64 et la plaque 62 sont formées d'une seule pièce. L'étrier 60 est par exemple réalisé en métal ou en matériau composite.

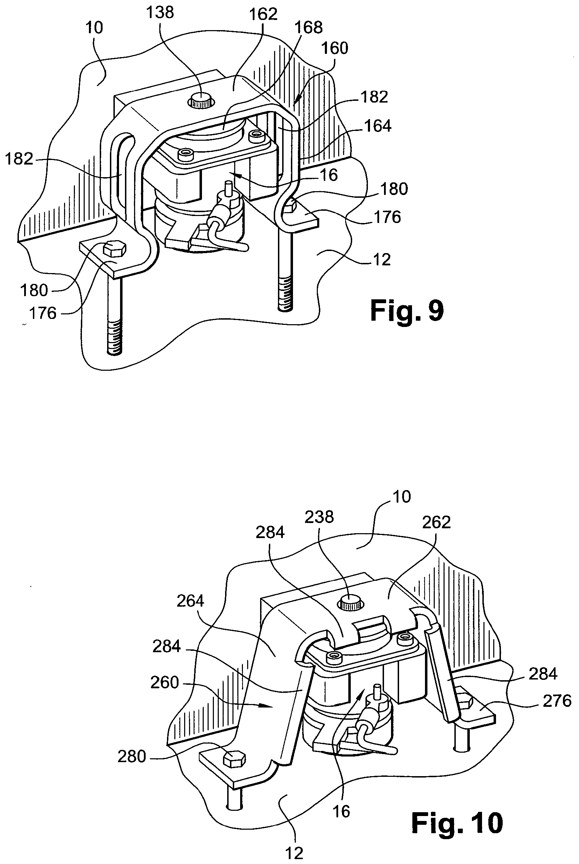

Dans la variante représentée en figure 9, l'organe de sécurité de sécurité est un étrier 160 ayant une forme générale en Ω. Cet étrier comporte une plaque médiane 162 de forme rectangulaire qui est reliée à deux extrémités latérales opposées à des pattes latérales 164 ayant un profil sensiblement en forme de S. Ces pattes latérales 164 en S confèrent une certaine souplesse à l'étrier qui est légèrement déformable élastiquement.

Ces pattes latérales 164 sont reliées à leurs extrémités supérieures à la plaque 162 et comprennent à leurs extrémités inférieures 176 des rebords orientés sensiblement parallèlement à la plaque 162 et radialement vers l'extérieur par rapport à l'axe longitudinal 30 de l'amortisseur de vibrations. Ces extrémités inférieures des pattes latérales 164 sont appliquées sur un élément de support ou sur le carter 12 du moteur, et comprennent des orifices de passage de vis 180 de fixation de l'étrier sur l'élément ou le carter. Chaque patte comporte une fente 182 qui s'étend sensiblement parallèlement à l'axe longitudinal 30 de l'amortisseur de vibrations. Ces fentes 182 permettent d'alléger l'étrier, d'augmenter sa souplesse, et autorisent le passage d'un outil de vissage/dévissage des vis 180 de fixation de l'étrier sur le carter.

Cet étrier 160 est monté à cheval sur l'amortisseur de vibrations et sa plaque médiane 162 est appliquée et serrée sur le disque supérieur 26 de l'amortisseur de vibrations grâce aux vis de fixation 180. La plaque médiane 162 comporte un orifice central de passage de la tête de la vis 138 de fixation de l'amortisseur de vibrations 16 sur le carter. La plaque médiane 162 peut également comporter un renfoncement inférieur de logement du disque supérieur 26 de l'amortisseur de vibrations. Un joint annulaire 168 peut en outre être intercalé entre la plaque 162 de l'étrier et le disque supérieur de l'amortisseur de vibrations.

Cet étrier 160 peut être réalisé en métal ou en matériau composite, et est préférentiellement formé d'une seule pièce.

Dans la variante représentée en figure 10, l'étrier 260 a une forme générale en V ou en U renversé dont les pattes latérales 264 sont inclinées l'une par rapport à l'autre d'un angle compris entre 30 et 90° environ. Ces pattes latérales 264 sont reliées à deux extrémités opposées d'une plaque médiane 262 de forme rectangulaire qui coiffe l'amortisseur de vibrations 16. Les extrémités libres 276 des pattes latérales 264 sont similaires aux extrémités libres 176 des pattes latérales de l'étrier 160 de la figure 9. Les pattes latérales 264 et la plaque médiane 262 de l'étrier comportent en outre des rebords latéraux 284 de forme arrondie qui sont orientés vers l'amortisseur de vibrations de façon à limiter les déformations en flexion et en torsion de l'étrier 260.

Cet étrier 260 est réalisé en métal ou en matériau composite et est formé d'une seule pièce.

Dans une autre variante, l'organe de sécurité de sécurité est formé par une plaque sensiblement plane, comparable aux plaques 62, 162, 262, qui coiffe l'extrémité supérieure de l'amortisseur de vibrations et qui est directement fixée à deux extrémités opposées sur le carter ou un élément de support du moteur.

Dans encore une autre variante, ce type de plaque plane est fixé sur le carter ou l'élément de support par l'intermédiaire de câbles tendus.

## Revendications

1. Dispositif de support et de fixation d'un équipement (10) sur un carter (12) de nacelle ou de moteur d'avion, ce dispositif comportant au moins un amortisseur de vibrations (16) comprenant une première partie (18) destinée à être fixée sur le carter, et une seconde partie (20) qui est reliée par des moyens (22) élastiquement déformables à la première partie, cette seconde partie étant destinée à être reliée rigidement à l'équipement de façon à suspendre cet équipement au carter, le ou chaque amortisseur de vibrations étant associé à un organe de sécurité (60, 160, 260) :
- destiné à maintenir l'amortisseur de vibrations en place sur le carter en cas de défaillance ou de rupture de cet amortisseur de vibrations ou de moyens (38, 138, 238) de fixation de l'amortisseur de vibrations sur le carter, pour assurer le support et la fixation de l'équipement, et
- monté à cheval sur l'amortisseur de vibrations, l'organe de sécurité comportant une partie médiane (62, 162, 262), qui coiffe ou couvre au moins une partie de l'amortisseur de vibrations, et des extrémités latérales opposées (64, 164, 264) destinées à être fixées sur le carter
- le dispositif comprenant des moyens (80, 180, 280) de fixation de l'organe de sécurité sur le carter et des moyens (38, 138, 238) de fixation de l'amortisseur de vibrations sur le carter qui sont indépendants les uns des autres,
**caractérisé en ce que** :
- ledit organe de sécurité est indépendant de l'amortisseur de vibrations,
- la partie médiane (62, 162, 262) de l'organe de sécurité est formée par une plaque plane de forme circulaire ou rectangulaire,
- ladite plaque :
-- comprend à deux extrémités opposées des pattes latérales (64, 164, 264) de fixation sur le carter, ou
-- comprend des câbles de fixation sur le carter, à ses deux extrémités opposées, ou
-- est directement fixée à deux extrémités opposées sur le carter, et
- un joint (68) plat est intercalé entre la partie médiane (62) de l'organe de sécurité et une extrémité supérieure (26) de la première partie (18) de l'amortisseur de vibrations.

2. Dispositif selon la revendication 1, **caractérisé en ce que** l'organe de sécurité est un étrier (60, 160, 260) et présente une forme générale en fer à cheval.

3. Dispositif selon la revendication 1, **caractérisé en ce que** le joint (68) est réalisé dans un matériau élastiquement déformable ou dans un matériau à fort coefficient de frottement.

4. Dispositif selon la revendication 1, **caractérisé en ce que** le joint (68) est logé dans un renfoncement inférieur (66) de la partie médiane (62) de l'organe de sécurité.

5. Dispositif selon l'une des revendications précédentes, **caractérisé en ce que** la partie médiane (62) de l'organe de sécurité comporte un orifice central (72) aligné avec un orifice (70) du joint (68) pour le passage d'une vis (38) de fixation de l'organe de sécurité à la première partie (18) de l'amortisseur de vibrations.

6. Dispositif selon l'une des revendications précédentes, **caractérisé en ce que** les pattes latérales (64, 164, 264) de l'organe de sécurité sont sensiblement parallèles l'une à l'autre ou forment entre elles un angle compris entre 30 et 90° environ

7. Dispositif selon l'une des revendications précédentes, **caractérisé en ce que** les pattes latérales (64) de l'organe de sécurité ont chacune en section une forme sensiblement en C.

8. Dispositif selon l'une des revendications 1 à 6, **caractérisé en ce que** les pattes latérales (164) de l'organe de sécurité ont une forme générale en S.

9. Dispositif selon la revendication 8, **caractérisé en ce que** les pattes latérales (164) comprennent chacune au moins une fente (182) s'étendant le long de l'axe de l'amortisseur de vibrations.

10. Dispositif selon l'une des revendications 1 à 6, **caractérisé en ce que** la partie médiane (262) et les pattes latérales (264) de l'organe de sécurité sont formées par des plaques sensiblement planes, ces plaques comportant sur leurs côtés des rebords arrondis (284) orientés vers l'amortisseur de vibrations.

11. Dispositif selon l'une des revendications précédentes, **caractérisé en ce que** les pattes latérales (64, 164, 264) comprennent à leurs extrémités libres des plaquettes (76) ou des rebords (176, 276) d'appui sur le carter, ces plaquettes ou rebords comportant des orifices de passage de vis (80, 180, 280) de fixation de l'organe de sécurité sur le carter.

12. Dispositif selon l'une des revendications précédentes, **caractérisé en ce que** l'organe de sécurité (60, 160, 260) est formé d'une seule pièce.

13. Dispositif selon l'une des revendications précédentes, **caractérisé en ce que** l'organe de sécurité (60, 160, 260) est réalisé en métal ou en matériau composite et est rigide ou déformable élastiquement.

14. Moteur d'avion, comprenant une turbomachine entourée coaxialement par une nacelle, **caractérisé en ce qu'**il comprend au moins un équipement (10) suspendu à un carter de turbomachine ou de nacelle par un dispositif selon l'une des revendications précédentes.

## Patentansprüche

1. Vorrichtung zum Abstützen und Befestigen eines Bauteils (10) an einem Gondel- oder Flugzeugtriebwerkgehäuse (12), wobei diese Vorrichtung mindestens einen Schwingungsdämpfer (16) mit einem ersten Abschnitt (18), der dazu bestimmt ist, an das Gehäuse befestigt zu werden, und mit einem zweiten Abschnitt (20), der durch elastisch verformbare Mittel (22) mit dem ersten Abschnitt verbunden ist, aufweist, wobei dieser zweite Abschnitt dazu bestimmt ist, starr mit dem Bauteil verbunden zu werden, um dieses Bauteil an dem Gehäuse aufzuhängen,
wobei dem bzw. jedem Schwingungsdämpfer ein Sicherheitselement (60, 160, 260) zugeordnet ist,
- das dazu bestimmt ist, den Schwingungsdämpfer dann, wenn ein Versagen oder Bruch dieses Schwingungsdämpfers oder seiner Befestigungsmittel (38, 138, 238) zum Befestigen des Schwingungsdämpfers an das Gehäuse auftritt, den Schwingungsdämpfer an Ort und Stelle am Gehäuse zu halten, um die Abstützung und Befestigung des Bauteils zu gewährleisten, und
- das rittlings am Schwingungsdämpfer angebracht ist, wobei das Sicherheitselement einen Mittelabschnitt (62, 162, 262), der zumindest einen Abschnitt des Schwingungsdämpfers überbrückt oder bedeckt, und entgegengesetzte seitliche Enden (64, 164, 264) aufweist, die dazu bestimmt sind, an das Gehäuse befestigt zu werden,
wobei die Vorrichtung Mittel (80, 180, 280) zum Befestigen des Sicherheitselements an das Gehäuse enthält, die unabhängig von den Mitteln (38, 138, 238) zum Befestigen des Schwingungsdämpfers an das Gehäuse sind,
**dadurch gekennzeichnet, dass**
- das Sicherheitselement unabhängig vom Schwingungsdämpfer ist,
- der Mittelabschnitt (62, 162, 262) des Sicherheitselements aus einer flachen Platte mit kreisförmiger oder rechteckiger Form gebildet wird,
- wobei die Platte
-- an ihren beiden entgegengesetzten Enden seitliche Laschen (64, 164, 264) zum Befestigen an das Gehäuse enthält oder
-- an ihren beiden entgegengesetzten Enden Kabel zum Befestigen an das Gehäuse aufweist, oder
-- an zwei entgegengesetzten Enden direkt an das Gehäuse befestigt ist, und
- eine flache Dichtung (68) zwischen dem Mittelabschnitt (62) des Sicherheitselements und einem oberen Ende (26) des ersten Abschnitts (18) des Schwingungsdämpfers eingefügt ist.

2. Vorrichtung nach Anspruch 1,
**dadurch gekennzeichnet, dass**
es sich bei dem Sicherheitselement um einen Bügel (60, 160, 260) handelt und eine Hufeisenform aufweist.

3. Vorrichtung nach Anspruch 1,
**dadurch gekennzeichnet, dass**
die Dichtung (68) aus einem elastisch verformbaren Material oder aus einem Material mit hohem Reibungskoeffizienten hergestellt ist.

4. Vorrichtung nach Anspruch 1,
**dadurch gekennzeichnet, dass**
die Dichtung (68) in einer unteren Aussparung (66) des Mittelabschnitts (62) des Sicherheitselements aufgenommen ist.

5. Vorrichtung nach einem der vorangehenden Ansprüche,
**dadurch gekennzeichnet, dass**
der Mittelabschnitt (62) des Sicherheitselements eine zentrale Öffnung (72) aufweist, die mit einer Öffnung (70) der Dichtung (68) für den Durchtritt einer Schraube (38) zum Befestigen des Sicherheitselements an den ersten Abschnitt (18) des Schwingungsdämpfers fluchtet.

6. Vorrichtung nach einem der vorangehenden Ansprüche,
**dadurch gekennzeichnet, dass**
die seitlichen Laschen (64, 164, 264) des Sicherheitselements im Wesentlichen parallel zueinander verlaufen oder zwischen sich einen Winkel zwischen etwa 30 und 90° einschließen.

7. Vorrichtung nach einem der vorangehenden Ansprüche,
**dadurch gekennzeichnet, dass**
die seitlichen Laschen (64) des Sicherheitselements jeweils im Querschnitt im Wesentlichen C-förmig sind.

8. Vorrichtung nach einem der Ansprüche 1 bis 6,
**dadurch gekennzeichnet, dass**
die seitlichen Laschen (164) des Sicherheitselements S-förmig sind.

9. Vorrichtung nach Anspruch 8,
**dadurch gekennzeichnet, dass**
die seitlichen Laschen (164) jeweils mindestens einen Schlitz (182) aufweisen, der sich entlang der Achse des Schwingungsdämpfers erstreckt.

10. Vorrichtung nach einem der Ansprüche 1 bis 6,
**dadurch gekennzeichnet, dass**
der Mittelabschnitt (262) und die seitlichen Laschen (264) des Sicherheitselements aus im Wesentlichen flachen Platten gebildet sind, wobei diese Platten an ihren Seiten abgerundete Kanten (284) aufweisen, die dem Schwingungsdämpfer zugewandt sind.

11. Vorrichtung nach einem der vorangehenden Ansprüche,
**dadurch gekennzeichnet, dass**
die seitlichen Laschen (64, 164, 264) an ihren freien Enden Platten (76) oder Flansche (176, 276) zur Auflage an dem Gehäuse aufweisen, wobei diese Platten oder Flansche Öffnungen für den Durchtritt von Schrauben (80, 180, 280) zum Befestigen des Sicherheitselements an das Gehäuse aufweisen.

12. Vorrichtung nach einem der vorangehenden Ansprüche,
**dadurch gekennzeichnet, dass**
das Sicherheitselement (60, 160, 260) einstückig ausgebildet ist.

13. Vorrichtung nach einem der vorangehenden Ansprüche,
**dadurch gekennzeichnet, dass**
das Sicherheitselement (60, 160, 260) aus Metall oder Verbundmaterial hergestellt und starr oder elastisch verformbar ist.

14. Flugzeugtriebwerk, enthaltend ein Turbotriebwerk, das koaxial von einer Gondel umgeben ist,
**dadurch gekennzeichnet, dass**
es mindestens ein Bauteil (10) enthält, das an einem Turbotriebwerk- oder Gondelgehäuse mittels einer Vorrichtung nach einem der vorangehenden Ansprüche aufgehängt ist.

## Claims

1. Device for supporting and fixing equipment (10) to a fairing (12) of a nacelle or of an aircraft engine, the device comprising at least one vibration damper (16) comprising a first part (18) intended to be fixed to the fairing, and a second part (20) that is connected by elastically deformable means (22) to the first part, said second part being intended to be connected rigidly to the equipment so as to suspend said equipment on the fairing, the or each vibration damper being associated with a safety member (60, 160, 260):
- intended to keep the vibration damper in position on the fairing in the event of the failure or breakage of said vibration damper or of means (38, 138, 238) of fixation of the vibration damper on the fairing, to ensure the support and fixation of the equipment,
- which straddles the vibration damper, the safety device comprising a middle part (62, 162, 262), that at least partly caps or covers the damper, and lateral opposite ends (64, 164, 264) intended to be fixed to the fairing, the device comprising means (80, 180, 280) of fixation of the safety member on the fairing which are independent of the means (38, 138, 238) of fixation of the vibration damper on the fairing,
**characterised in that**
- the safety member is independent of the vibration damper,
- the middle part (62, 162, 262) of the safety member is formed with a flat plate having a circular or rectangular shape,
- said plate:
-- comprises, at two opposite ends, lateral feet (64, 164, 264) for fixation to the fairing, or
-- comprises, at its two opposite ends, cables for fixation to the fairing, or
-- is directly fixed at two opposite ends to the fairing, and,
- a flat gasket (68) is interposed between the middle part (62) of the safety member and an upper end (26) of the first part (18) of the vibration damper.

2. Device according to claim 1, **characterised in that** the safety member is a stirrup (60, 160, 260) and has a general Ω shape, or an inverted U or V shape.

3. Device according to claim 1, **characterised in that** the gasket (68) is made from an elastically deformable material or a material with a high friction coefficient.

4. Device according to claim 1, **characterised in that** the gasket (68) is housed in a lower reinforcement (66) of the middle part (62) of the safety member.

5. Device according to any of the preceding claims, **characterised in that** the middle part (62) of the safety member includes a central orifice (72) aligned with an orifice (70) of the gasket (68) for inserting a screw (38) to fix the safety member to the first part (18) of the vibration damper.

6. Device according to any of the preceding claims, **characterised in that** the lateral feet (64, 164, 264) of the safety member are noticeably parallel to each other or form between themselves an angle of between 30 and 90° approximately.

7. Device according to any of the preceding claims, **characterised in that** each of the lateral feet (64) of the safety member has a noticeable C shape in section.

8. Device according to any of the claims 1 to 6, **characterised in that** each of the lateral feet (64) of the safety member has a noticeable S shape in section.

9. Device according to claim 8, **characterised in that** the lateral feet (64) of the safety member each include at least one slit (182) extending along the axis of the vibration damper.

10. Device according to any of the claims 1 to 6, **characterised in that** the middle part (262) and the lateral feet (264) of the safety member are formed by plates which are noticeably flat, whereby said plates include, on their sides, rounded edges (284) oriented towards the vibration damper.

11. Device according to any of the preceding claims, **characterised in that** the lateral feet (64, 164, 264) include, at their free ends, small plates (76) or edges (176, 276) for a support on the fairing, whereby said small plates or edges include orifices for insertion of screws (80, 180, 280) to fix the safety member to the fairing.

12. Device according to any of the preceding claims, **characterised in that** the safety member (60, 160, 260) is formed of a single part.

13. Device according to any of the preceding claims, **characterised in that** the safety member (60, 160, 260) and is made from metal or a composite material and is rigid or elastically deformable.

14. Aircraft engine, including a turbine engine surrounded coaxially by a nacelle, **characterised in that** it comprises at least one piece of equipment (10) suspended on a turbine engine fairing or a nacelle fairing by means of a device according to any of the preceding claims.
